# EUROPEAN PATENT APPLICATION

(11) **EP 3 242 458 A1**
(43) Date of publication of application: **08.11.2017**
(21) Application number: 17156144.2
(22) Date of filing: 14.02.2017
(51) Int. Cl.: H04L 29/06, H04N 21/8355

(54) **RECONCILIATION OF SIM-CARD PURCHASED LICENSES TO DEVICES OF USER**

(30) Priority: 06.05.2016 US 201615148067
(71) Applicant: BlackBerry Limited, Waterloo, ON N2K 0A7 (CA)
(72) Inventor: MADEJ, Piotr, Mississauga, Ontario L4W 5P1 (CA); SMITH, Andrew Christopher, Ancaster, Ontario L9G 1E7 (CA); NICOLAISEN, Richard Eric, Waterloo, Ontario N2V 2C4 (CA)
(74) Representative: Hanna Moore + Curley

(57) **Abstract**

A virtual pool (140) of licenses associated with an identifier of a user (102) is created. A license is added to the virtual pool by associating the license with the identifier of the user. Each license in the virtual pool was obtained in association with a subscriber identity module 'SIM' card (124,126,127). Reconciliation of services and features in use by one or more devices (104,106,108) used by the user is performed (604,610) in relation to the seats of the licenses in the virtual pool, and then a license state for the user is determined (608) based on the reconciliation. The reconciliation checks (802) whether the services and features match or are licensed by or consume corresponding seats of licenses that are in the virtual pool. All seats of all licenses in the virtual pool, regardless of which SIM card they were obtained in association with, are considered in the reconciliation.

## Description

### TECHNICAL FIELD

The present disclosure relates to the licensing and provisioning of services at devices.

### BACKGROUND

Users of mobile devices desire access to licensed services that are provided by service providers. Some users obtain licenses for services solely in association with Subscriber Identity Module (SIM) cards. Such a license is provisioned by a wireless carrier (also known as a mobile network operator (MNO) or a mobile virtual network operator (MVNO)) and is "assigned" to a specific SIM card. A Subscriber Identity Module (SIM) card is an integrated circuit chip that securely stores an international mobile subscriber identity (IMSI) and its related key, which are used to identify and authenticate subscribers on mobile telephony devices. SIM cards are portable and can be removed from one mobile telephone and inserted into another mobile telephone. A SIM card is tied to a particular wireless carrier.

In traditional SIM-based licensing models, when a single-seat license is assigned to a specific SIM card, only a device using that specific SIM card can access the licensed services. A first device using the specific SIM card can access the licensed services if the first device is appropriately configured. If the specific SIM card is removed from the first device and subsequently used by a second device, then the first device is no longer able to access the licensed service, and the second device, if appropriately configured, can access the licensed service using the specific SIM card. If the specific SIM card is removed from the first device and replaced in the first device by another SIM card, then the first device is no longer able to access the licensed service, unless another license for the particular service is assigned to the replacement SIM card.

A user desiring to access the licensed services on two or more devices may encounter difficulties. Each device of the user that has a SIM card needs to be separately provisioned with its own single-seat license assigned to that device's SIM card. This is a cumbersome process that requires interactions between the wireless carrier for each such device of the user. Any device of the user that lacks a SIM card, such as a desktop computer, cannot be provisioned by the wireless carrier.

### SUMMARY

A license having one or more seats for a service or feature provided by a service provider is obtained in association with a subscriber identity module (SIM) card. Such a license is referred to occasionally in this document as a "SIM-based license". For example, the license is obtained from a wireless carrier. The license may be included in a plan that is obtained from the wireless carrier in association with the SIM card.

This document proposes creating a virtual pool of licenses associated with an identifier of a user. A license is added to the virtual pool by associating the license with the identifier of the user. Each license in the virtual pool was obtained in association with a SIM card. For example, the virtual pool may include one or more first licenses that were obtained in association with a first SIM card and one or more second licenses that were obtained in association with a second SIM card that differs from the first SIM card.

This document proposes that reconciliation of services and features in use by one or more devices used by the user is performed in relation to the seats of the licenses in the virtual pool, and that a license state for the user is determined based on the reconciliation. That is, the reconciliation checks whether the services and features match or are licensed by or consume corresponding seats of licenses that are in the virtual pool. If so, then the user is determined to be in a license state of compliance. If not, then the user is determined to be in a license state of non-compliance. A license state of non-compliance results from a situation where, for at least one service or feature in use by at least one device used by the user, the virtual pool lacks a corresponding seat of a license.

All seats of all licenses in the virtual pool, regardless of which SIM card they were obtained in association with, are considered in the reconciliation. A seat of a license in the virtual pool, which was obtained in association with a particular SIM card, can be matched to the appropriate service or feature in use by any device used by the user, regardless of whether that device is coupled (or was coupled in the past) to the particular SIM card or was never coupled to the particular SIM card. Indeed, the device that uses the service or feature and that is matched or licensed by or consumes the seat of the license may be incapable of being coupled to any SIM card. There may be a preference to match a seat of a license, which was obtained in association with a particular SIM card, to the appropriate service or feature in use by the device that is currently coupled to the particular SIM card, before attempting to match that seat to other devices used by the user.

The virtual pool of licenses associated with the identifier of the user may be created and maintained by a license infrastructure, in which case the license infrastructure performs the reconciliation and determines the license state. The licenses in the virtual pool may be for services and features from a single service provider, in which case the reconciliation and license state is applicable only to the single service provider. Alternatively, the virtual pool may include licenses for services and features provided by multiple service providers, and the reconciliation and license state may be applicable to the multiple service providers as a whole.

The virtual pool of licenses associated with the identifier of the user may be created and maintained by a single service provider, in which case the single service provider performs the reconciliation and determines the license state, which are applicable only to the single service provider. The single service provider may be one of multiple service providers, each of which creates and maintains its own virtual pool of licenses associated with the identifier and performs reconciliation and determines license state in relation to the services and features provided by that service provider.

A hybrid implementation is also contemplated, in which one or more service providers create and maintain respective virtual pools of licenses and perform reconciliation and determine license state for their respective services and features, and a license infrastructure creates and maintains a virtual pool of license and performs reconciliation and determines license state for one or more other service providers.

A license may be added to the virtual pool, and thereby associated with the identifier of the user, in response to determining that a SIM card (in association with which the license was obtained) was coupled to a device during service use by a wireless device in connection with a service account created for the user.

### BRIEF DESCRIPTION OF THE DRAWINGS

**FIG. 1** and **FIG. 2** are illustrations of an example relationship of a user to devices, services and features in use by the devices, SIM cards, and licenses;
**FIG. 3** illustrates an example environment for licensing and provision of services;
**FIG. 4** illustrates a portion of the example relationship illustrated in FIG. 1;
**FIG. 5** illustrates a portion of the example relationship illustrated in FIG. 2;
**FIG. 6** is a flowchart illustration of an example licensing method;
**FIG. 7** is a flowchart illustration of an example method for building a virtual pool of licenses;
**FIG. 8** is a flowchart illustration of an example method for determining a license state of a user based on reconciliation; and
**FIG. 9** is a block diagram of a computing device.

### DETAILED DESCRIPTION

Licensed services are provided by service providers. Examples of Software as a Service (SaaS) include customer relationship management (CRM) services, accounting services, meeting and collaboration services, marketing services, business management services, and the like. Platform as a Service (PaaS) and Infrastructure as a Service (IaaS) are also provided by service providers.

When licenses are obtained from a wireless carrier, each license is directly associated with a particular subscriber of the wireless carrier, and therefore with a particular subscriber identity module (SIM) card. Identifiers of a SIM card include its unique integrated circuit card identifier (ICCID), and the international mobile subscriber identity (IMSI) stored in the SIM card. The SIM card may also be identified by the mobile station international subscriber directory number (MSISDN) associated to the SIM card.

Reconciliation is the act of comparing what services and features a user is entitled to use (as indicated in licenses) with what services and features are actually being used by devices of the user.

This document proposes building a data representation of a relationship between a user, devices of the user, services and features in use by devices used by the user, SIM cards coupled to devices of the user, and licenses associated with SIM cards. This representation creates an indirect association of licenses with an identifier of the user, even though the licenses were obtained in direct association with a particular SIM card and not in direct association with the user. The licenses associated with the identifier of the user form a virtual pool, reconciliation of licenses in the virtual pool to services and features in use by devices used by the users is performed, and a license state for the user is determined based on the reconciliation.

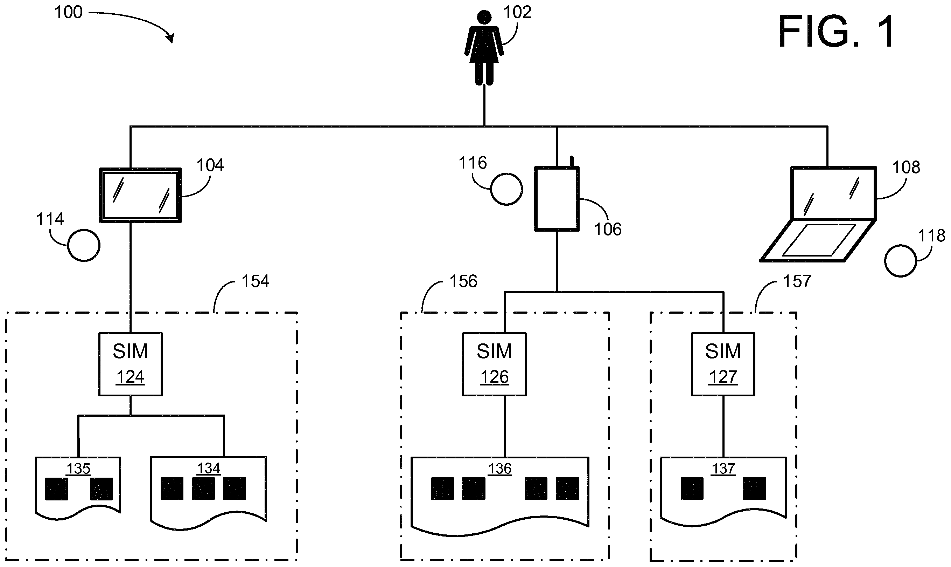

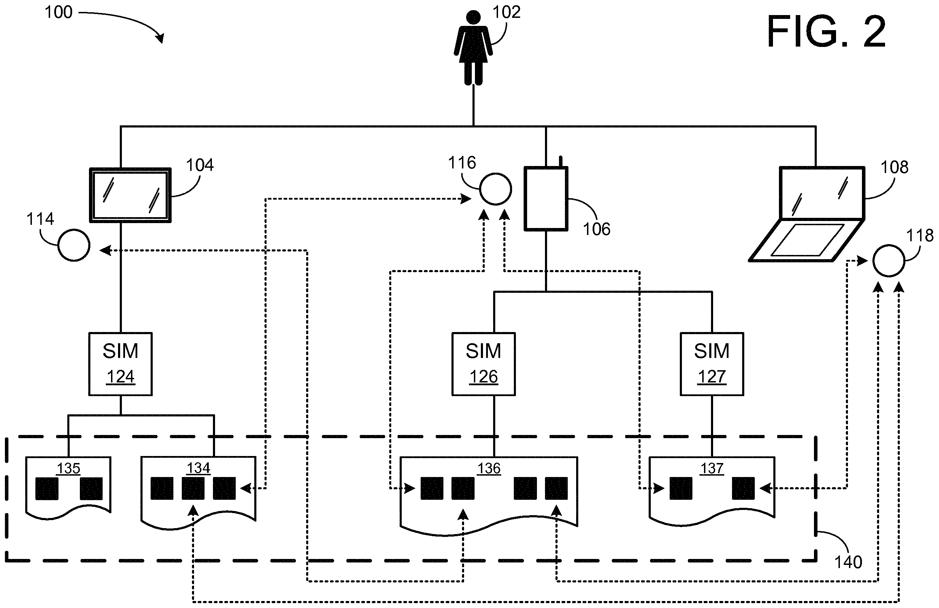

**FIG. 1** and **FIG. 2** are illustrations of an example relationship 100 for a user 102. For clarity, some aspects are emphasized in FIG. 1 and other aspects are emphasized in FIG. 2. The following devices are in use by the user 102: a first wireless device 104 (illustrated as a tablet), a second wireless device 106 (illustrated as a smartphone), and an uncoupled device 108 (illustrated as a laptop computer). In the data representation, the identifier of the user 102 is associated with one or more identifiers of the first wireless device 104, with one or more identifiers of the second wireless device 106, and with one or more identifiers of the uncoupled device 108.

One or more services and features 114 are in use by the first wireless device 104. One or more services and features 116 are in use by the second wireless device 106. One or more services and features 118 are in use by the uncoupled wireless device 108. Services and features are illustrated in FIG. 1 and FIG. 2 by circles.

In the data representation, the one or more identifiers of the first wireless device 104 are associated with one or more identifiers of a first SIM card 124. This represents that the first SIM card 124 is coupled to the first wireless device 104 or was previously coupled to the first wireless device 104 and has not yet been coupled to any other wireless device.

In the data representation, the one or more identifiers of the second wireless device 106 are associated with one or more identifiers of a second SIM card 126 and with one or more identifiers of a third SIM card 127. This may represent that the second SIM card 126 is coupled to second wireless device 106 and that the third SIM card 127 was previously coupled to the second wireless device 106 and has not yet been coupled to any other wireless device.

In the data representation, the one or more identifiers of the uncoupled device 108 are not associated with the identifier of any SIM card. This may represent that the uncoupled device 108 is not capable of being coupled with any SIM card. Alternatively, the uncoupled device 108 may be capable of being coupled with a SIM card and is currently not coupled to any SIM card.

In this example, a three-seat license 134 and a two-seat license 135 were obtained in association with the first SIM card 124, a four-seat license 136 was obtained in association with the second SIM card 126, and a two-seat license 137 was obtained in association with the third SIM card 127. A seat of a license is illustrated in FIG. 1 and FIG. 2 as a black box.

As illustrated in FIG. 2, the licenses 134, 136 and 137 jointly form a virtual pool 140 of licenses that are associated with the identifier of the user 102.

Reconciliation is performed based on the information in the representation of the relationship, while treating all licenses associated with SIM cards that are coupled to devices of the user (or were previously coupled to devices of the user and have not yet been coupled to devices of a different user), as a single pool of user licenses that can be reconciled with actual use services and features by any device of the user. That is, when determining whether the user 102 is entitled to use the services and features 114, 116 and 118 that are actually being used by the devices 104, 106 and 108, respectively, the reconciliation takes into account all licenses in the virtual pool 140, regardless of whether the particular device making use of the specific service has coupled thereto a SIM card to which a license for that specific service is associated.

Reconciliation is illustrated in FIG. 2 by dotted lines.

For example, one of the services and features in use by the first wireless device 104 may be matched to or licensed by or consume a seat of the license 136.

In another example, one of the services and features in use by the second wireless device 106 may be matched to or licensed by or consume a seat of the license 134, another one of the services and features in use by the second wireless device 106 may be matched to or licensed by or consume a seat of the license 136, and another one of the services and features in use by the second wireless device 106 may be matched to or licensed by or consume a seat of the license 137.

In a further example, one of the services and features in use by the uncoupled device 108 may be matched to or licensed by or consume a seat of the license 134, another one of the services and features in use by the uncoupled device 108 may be matched to or licensed by or consume a seat of the license 136, and another one of the services and features in use by the uncoupled device 108 may be matched to or licensed by or consume a seat of the license 137.

As illustrated, sometimes a service or feature in use by a wireless device is matched to or licensed by or consumes a seat of a license that is associated with a SIM card that is coupled to that wireless device (or that was previously coupled to the wireless device and has not yet been coupled to any other wireless device). This is the case for the second wireless device 106 and the license 136 and the license 137.

As illustrated, sometimes a seat of a license that is associated with a SIM card is matched to or licenses or is consumed by a service or feature in use by a device that was never coupled to that SIM card. This is the case for the first wireless device 104 and the license 136, and for the second wireless device 106 and the license 134. This is also the case for the uncoupled device 108 and the licenses 134, 136 and 137.

As illustrated, the virtual pool 140 may include seats of SIM-based licenses that have yet to be matched to or consumed by any devices used by the user. This is the case for the license 134 (one available seat), for the license 135 (two available seats) and for the license 136 (one available seat).

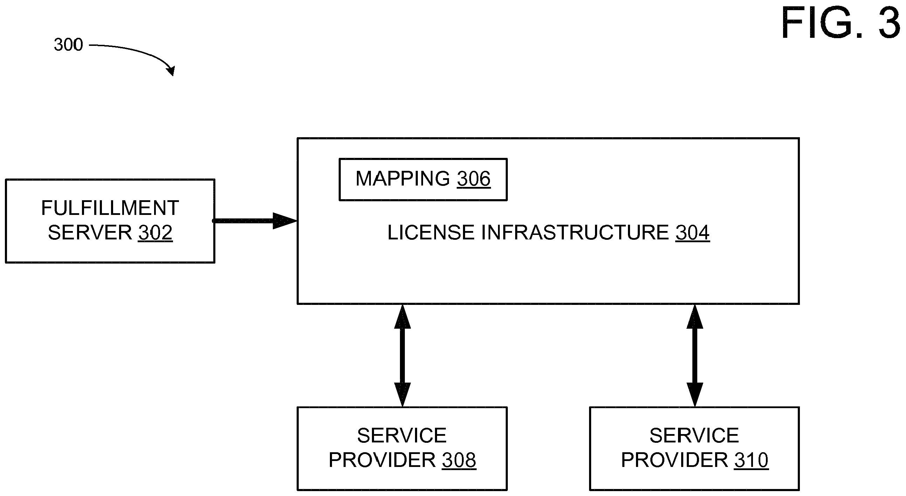

**FIG. 3** illustrates an example environment 300 for licensing and provision of services. As mentioned above, licenses may be obtained, in association with a SIM card, from a wireless carrier. A license may be bundled with other items in a plan offered by the wireless carrier. An identifier such as a stock keeping unit (SKU) identifies the plan (or the license) within a fulfillment server 302 of a wireless carrier. The fulfillment server 302 is integrated with a license infrastructure 304.

The license infrastructure 304 may be implemented using a web server, and web service protocols over HTTP may be used to communicate with the license infrastructure 304. Examples of the web service protocols include Simple Object Access Protocol (SOAP) and REpresentational State Transfer (REST).

As part of the integration, the license infrastructure 304 has access to a mapping 306 that maps each SKU to license details. As part of the integration, the fulfillment server 302 is operable or configured to establish a server-to-server connection to the license infrastructure 304 and to inform the license infrastructure 304 of the purchase by communicating to the license infrastructure 304 a SKU of an obtained plan or license and the one or more identifiers of the specific SIM card associated with the obtained plan or license. With the purchase information from the fulfillment server 302 and the mapping 306, the license infrastructure 304 can then build a data representation of a relationship between the obtained license or the licenses of the obtained plan and the SIM card. Examples of such a relationship are illustrated in FIG. 1. For example, there is a relationship 154 between the licenses 134 and 135 and the first SIM card 124. In another example, there is a relationship 156 between the license 136 and the second SIM card 126. In a further example, there is a relationship 157 between the license 137 and the third SIM card 127. As purchases are made and the fulfillment server 302 informs the license infrastructure 304 of the purchases, the license infrastructure 304 builds the relationships between licenses and SIM cards.

The user 102 may register for a service account with a service provider, thereby providing the service provider with the identifier of the user and optionally choosing or receiving credentials for activation of services and features that are provided by the service provider.

A first service provider 308 and a second service provider 310 are shown in FIG. 3. A first service account may be registered for the user 102 at the first service provider 308 and a second service account may be registered for the user 102 at the second service provider 310. In other cases, there may be only a single service provider, or there may be more than two service providers.

For example, one or more of the services or features 114 may be activated at the first wireless device 104 while the first wireless device 104 is coupled to the first SIM card 124. The activation may involve having the first wireless device 104 contact the first service provider 308 over a network (not shown) and providing credentials if appropriate, where the first service provider 308 provides those services or features 114. Precise details of the service or feature activation are beyond the scope of this disclosure.

During activation of the service or feature, one or more identifiers of the first SIM card 124 and one or more identifiers of the first wireless device 104 are communicated to the first service provider 308. Subsequently, the first service provider 308 reports the one or more identifiers of the first SIM card 124 and the one or more identifiers of the first wireless device 104 to the license infrastructure 304. The license infrastructure 304 uses the information reported by the first service provider 308 to augment the data representation of the relationship, by associating the one or more identifiers of the first SIM card 124 to the one or more identifiers of the first wireless device 104, thereby indicating that there is a relationship between the first SIM card 124 and the first wireless device 104.

In some implementations, the first service provider 308 also reports to the license infrastructure 304 the identifier of the user 102 and an indication of the services or features 114 in use or being activated at the first wireless device 104. In those implementations, the license infrastructure 304 uses the information reported by the first service provider 308 to augment the data representation of the relationship, by associating the one or more identifiers of the first wireless device 104 to the identifier of the user 102, and the services and features 114 provided by the first service provider 308 that are in use by the first wireless device 104. Over time, the license infrastructure 304 builds a data representation of a relationship of the devices used by the user 102, services and features in use by those devices (the services and features provided by one or more service providers), SIM cards coupled to those devices (at some point in time), and licenses that were obtained in association with those SIM cards. In these implementations, the data representation includes the virtual pool 140 of licenses associated with the identifier of the user 102, and the license infrastructure 304 performs the reconciliation and determines the license state for the user 102.

In other implementations, the first service provider 308 builds a data representation of a relationship of the user 102 to the devices used by the user 102 and to the services and features in use by those devices. Only those devices used by the user 102 to activate or access services and features provided by the first service provider 308 are included in the data representation. Only those services and features provided by the first service provider 308 are included in the data representation. In these implementations, the first service provider 308 obtains from the license infrastructure 304 the association of the one or more identifiers of the first SIM card 124 to the one or more identifiers of the first wireless device 104, and the association of the one or more identifiers of the first SIM card 124 to one or more of the first licenses 134 and 135. Subsequently, the first service provider 308 augments the data representation of the relationship with the information obtained from the license infrastructure 304. Over time, the first service provider 308 builds a data representation of a relationship of the devices used by the user 102 (to activate or access services and features provided by the first service provider 308), services and features in use by those devices (the services and features provided by the first service provider 308), SIM cards coupled to those devices (at some point in time), and licenses that were obtained in association with those SIM cards. In these implementations, the first service provider 308 performs the reconciliation and determines the license state for the user 102 with respect to services and features that are provided by the first service provider 308.

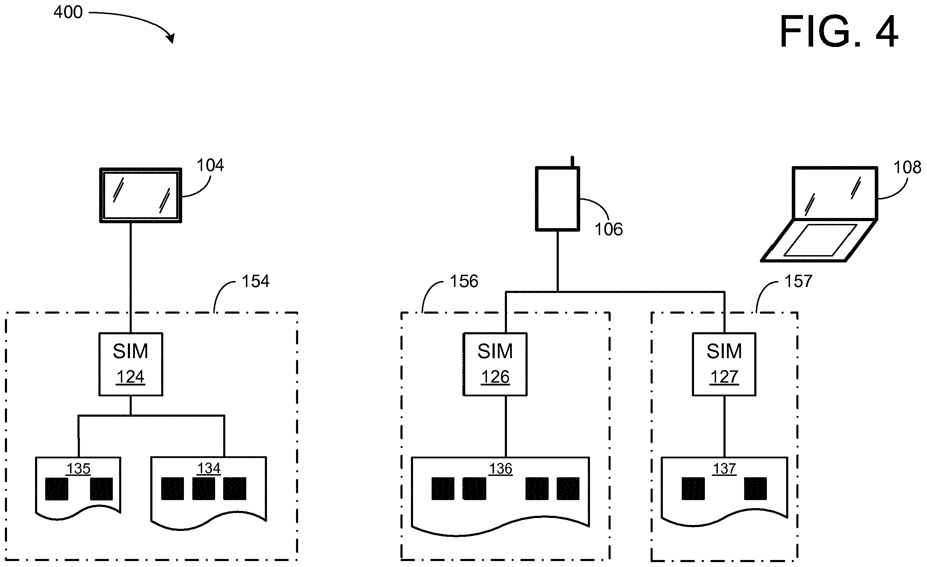

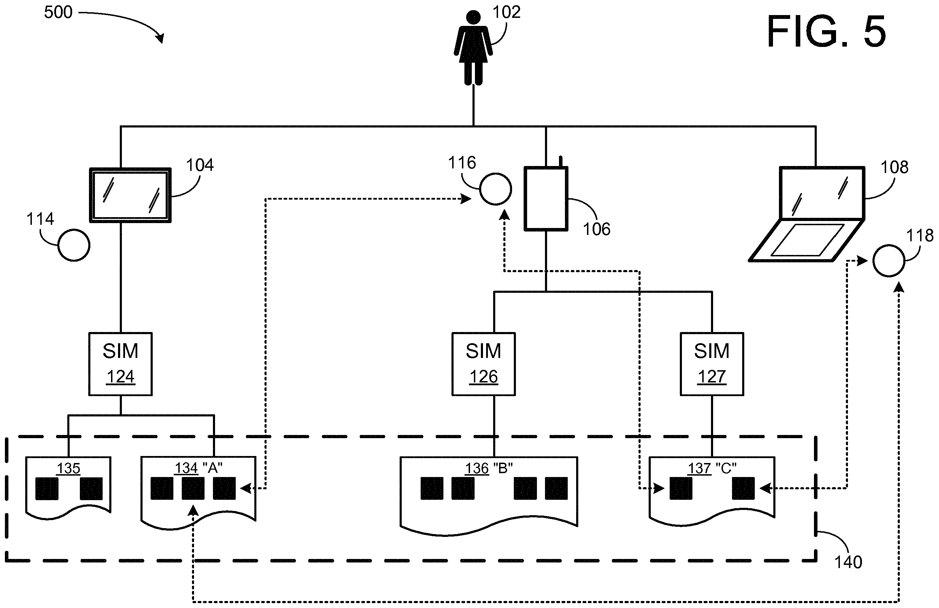

Consider, for example, that the seats of the license 134 are for a service "A" provided by the first service provider 308, that the seats of the license 136 are for a service "B" provided by the second service provider 310, and that the seats of the license 137 are for a service "C" provided by the first service provider 308. Consider further that the service "A" has been activated by the first wireless device 104, the services "A", "B", and "C" have been activated by the second wireless device 106, and the services "A", "B", and "C" have been activated by the uncoupled device 108. In the implementations where the license infrastructure 304 performs the reconciliation and determines the license state of the user 102, the license infrastructure 304 will have built a data representation of the relationship 100 illustrated in FIG. 2. In the implementations where the first service provider 308 performs the reconciliation and determines the license state of the user 102 in relation to the services "A" and "C" provided by the first service provider 308, the license infrastructure will have built a data representation of a relationship 400 of devices and SIM cards and licenses, as illustrated in FIG. 4, and the first service provider 308 will have built a data representation of a relationship 500 as illustrated in FIG. 5.

Licenses may be represented by subscriber service profiles (SSPs). An SSP may be a document, for example, in extensible Markup Language (XML) format or in JavaScript Object Notation (JSON) format, or any suitable format for exchanging data. An example SSP is provided below:

```
 {
     "service": [
          {
               "name": "ServiceName1",
               "policy": {
                    "enabled": true,
                    "quantity": 3,
                    "entitlement": [
                         "feature1",
                         "feature2"
                    ]
               }
          },
          {
               "name": "ServiceName2",
               "policy": {
                    "enabled": true,
                    "quantity": 2,
                    "entitlement": [
                         "feature1",
                         "feature2",
                         "feature3"
                    ]
               }
          },
     ]
 }
```

This example SSP represents three seats for a service named *ServiceName1* and two seats for a service named *ServiceName2.* A service name uniquely identifies the service provider of that service. A service provider may provide more than one service, each service having its own name. For each service, the SSP specifies the one or more features that are licensed.

The description thus far treats the user 102 as an independent individual. In the event that the user 102 belongs to an organization, certain modifications may be applicable. For example, instead of the user registering for a service account, an administrator at the organization may register the user for the service account with the service provider and may inform the user of the registration (and provide the user with any credentials for activation of the service and features). In those implementations where a service provider reports to the license infrastructure 304 the identifier of the user and an indication of the services or features in use or being activated at a device, the service provider may also report an identifier of the organization. Subsequently, the license infrastructure 304 may associate the identifier of the user with the identifier of the organization. This enables the license infrastructure 304 to perform reconciliation first with the virtual pool of licenses obtained in association with SIM cards associated with devices of the user, and then, if the virtual pool lacks a license for a particular service or feature in use, to reconcile the use with any licenses that were obtained in association with the organization as a whole. In those implementations where the service provider performs the reconciliation and determines the license state of the user, the service provider will associate the user with the organization and, if the local virtual pool created at the service provider lacks a license for a particular service or feature in use, the service provider is able to reconcile the use with any licenses that were obtained in association with the organization as a whole.

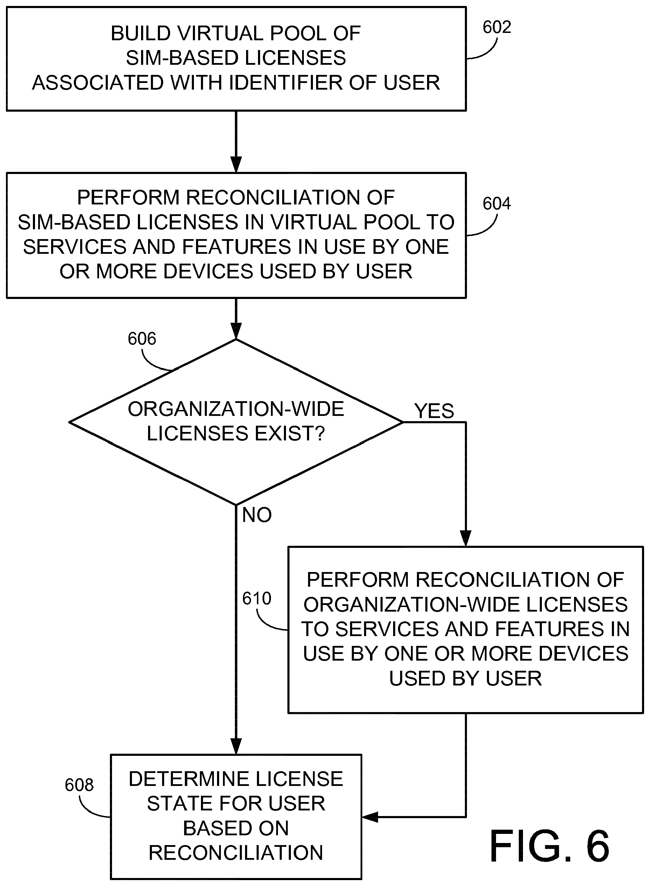

**FIG. 6** is a flowchart illustration of an example licensing method. This licensing method may be performed by the license infrastructure 304 or by a service provider (for example, the service provider 308 or the service provider 310). The licensing method may be performed repeatedly as licenses are obtained, as SIM cards are coupled to devices, and as devices are used to activate or access services and features. The licensing method may be performed upon request for licensing status.

Build at 602 a virtual pool of one or more SIM-based licenses that are associated with an identifier of a user.

Perform at 604 reconciliation of the licenses in the virtual pool to services and features in use by one or more devices used by the user.

If the user does not belong to an organization, or if the reconciliation indicates that the services and features that are in use by the one or more devices used by the user match seats of licenses in the virtual pool, then determine at 608 a license state for the user based on the reconciliation.

If the user belongs to an organization, and if there is at least one service or feature in use by a device for which the virtual pool lacks a seat of a license, check at 606 whether there are any organization-wide licenses. If so, then perform at 610 reconciliation of the organization-wide licenses to the services and features in use by the one or more devices used by the user, and then determine at 608 a license state for the user based on the reconciliation. If not, then proceed to determine at 608 a license state for the user based on the reconciliation.

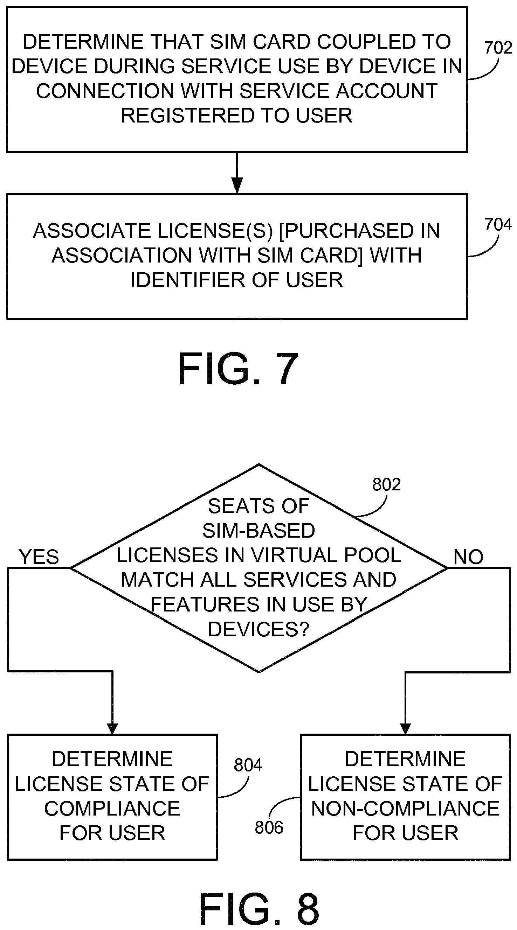

**FIG. 7** is a flowchart illustration of an example method for building a virtual pool of licenses. At 702, determine that a SIM card that is coupled to a device during service use by the device in connection with a service account that is registered to the user. Responsive to making this determination, associate at 704 the one or more licenses that were obtained in association with that SIM card with an identifier of the user.

The virtual pool 140 illustrated in FIG. 2 includes the three-seat license 134, which was associated with the identifier of the user 102 (and thereby added to the virtual pool 140) responsive to determining that the first SIM card 124 was coupled to the first wireless device 104 during service use by the first wireless device 104 in connection with a service account registered to the user 102. The service account may have been with the first service provider 308.

The virtual pool 140 includes the four-seat license 136, which was associated with the identifier of the user 102 (and thereby added to the virtual pool 140) responsive to determining that the second SIM card 126 was coupled to the second wireless device 106 during service use by the second wireless device 106 in connection with a service account registered to the user 102. The service account may have been with the second service provider 310.

The virtual pool 140 also includes the two-seat license 137, which was associated with the identifier of the user 102 (and thereby added to the virtual pool 140) responsive to determining that the third SIM card 127 was coupled to the second wireless device 106 during service use by the second wireless device 106 in connection with a service account registered to the user 102. The service account may have been with the first service provider 308.

This shows that the virtual pool can include licenses obtained in association with different SIM cards, where the different SIM cards were coupled to respective different wireless devices during service use in connection with the same service account with the same service provider.

This also shows that the virtual pool can include licenses obtained in association with different SIM cards coupled (at different times) to the same wireless device while the wireless device activated or made use of services from different service providers.

This also shows that even when a SIM card is uncoupled from a wireless device, the licenses obtained in association with that SIM card remain in the virtual pool as long as the SIM card is not coupled to a different wireless device.

**FIG. 8** is a flowchart illustration of an example method for determining a license state of a user based on reconciliation.

At 802, check whether the services and features that are in use by the one or more devices used by the user match seats of licenses in the virtual pool (and, if applicable, any available seats of organization-wide licenses). If so, then at 804, determine a license state of compliance for the user. If not, then at 806, determine a license state of non-compliance for the user, because the virtual pool (and, if applicable, the organization-wide licenses) lacks a seat of a SIM-based license for at least one of the services or features in use by at least one of the devices used by the user.

A non-transitory computer readable medium at the license infrastructure 304 may store instructions which when executed by a processor of a computing device of the license infrastructure 304, cause the processor to perform acts described in this document as being performed by the license infrastructure 304.

A non-transitory computer readable medium at a service provider (for example, the first service provider 308 or the second service provider 310) may store instructions which when executed by a processor of a computing device of the service provider, cause the processor to perform acts described in this document as being performed by the service provider.

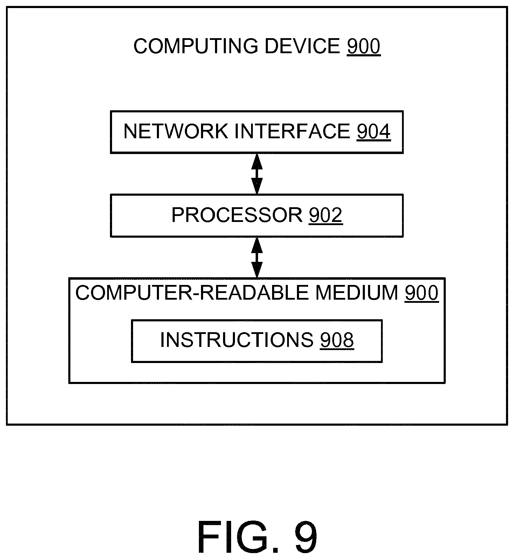

**FIG. 9** is a block diagram of a computing device 900, for example a computing device of the license infrastructure 304 or a computing device of a service provider (for example, the first service provider 308 or the second service provider 310). The computing device 900 comprises a processor 902 coupled to a network interface 904 and to a non-transitory computer readable medium 906 (for example, a physical memory). Instructions 908 are stored in the computer readable medium 906 for execution by the processor.

## Claims

1. A licensing method comprising:
associating a first license (136) with an identifier of a user (102), thereby adding the first license (136) to a virtual pool (140) of licenses associated with the identifier of the user (102), the first license (136) having been obtained in association with a first subscriber identity module 'SIM' card (126);
performing a reconciliation of licenses in the virtual pool (140) to services and features in use by one or more devices used by the user (102), the one or more devices including a device (108) that has never been coupled to the first SIM card (126), wherein performing the reconciliation comprises matching a seat of the first license (136) to a service or feature (118) in use by the device (108) that has never been coupled to the first SIM card (126); and
determining a license state for the user (102) based on the reconciliation.

2. The licensing method of claim 1, further comprising:
associating a second license (134) with the identifier of the user (102), thereby adding the second license (134) to the virtual pool (140), the second license (134) having been obtained in association with a second SIM card (124) that differs from the first SIM card (126).

3. The licensing method of claim 1, wherein associating the first license (136) with the identifier of the user (102) is performed in response to determining that the first SIM card (126) was coupled to a first wireless device (106) during service use by the first wireless device (106) in connection with a first service account registered to the user (102).

4. The licensing method of claim 3, further comprising:
associating a second license (134) with the identifier of the user (102), thereby adding the second license (134) to the virtual pool (140), the second license (134) having been obtained in association with a second SIM card (124) that differs from the first SIM card (126),
wherein associating the second license (134) with the identifier of the user (102) is performed in response to determining that the second SIM card (124) was coupled to a second wireless device (104) during service use by the second wireless device (104) in connection with a second service account registered to the user (102), wherein the second wireless device (104) differs from the first wireless device (106).

5. The licensing method of claim 4, wherein performing the reconciliation comprises matching a seat of the second license (134) to a service or feature (116) in use by the first wireless device (106).

6. The licensing method of claim 4, wherein the first service account is with a service provider and the second service account is with the service provider.

7. The licensing method of claim 4, wherein the first service account is with a first service provider and the second service account is with a second service provider that differs from the first service provider.

8. The licensing method of claim 3, further comprising:
associating a second license (137) with the identifier of the user (102), thereby adding the second license (137) to the virtual pool (140), the second license (137) having been obtained in association with a second SIM card (127) that differs from the first SIM card (126),
wherein associating the second license (137) with the identifier of the user (102) is performed in response to determining that the second SIM card (127) was coupled to the first wireless device (106) during service use by the first wireless device (106) in connection with a second service account registered to the user (102).

9. The licensing method of claim 8, wherein performing the reconciliation comprises matching a seat of the second license (137) to a service or feature (116) in use by the first wireless device (106).

10. The licensing method of claim 8, wherein the first service account is with a service provider and the second service account is with the service provider.

11. The licensing method of claim 8, wherein the first service account is with a first service provider and the second service account is with a second service provider that differs from the first service provider.

12. The licensing method of claim 1, wherein the reconciliation is performed by a service provider regarding services and features available from the service provider, and determining the license state for the user (102) comprises:
determining a license state of compliance (804) in the event that the reconciliation indicates that the services and features that are available from the service provider and are in use by the one or more devices used by the user (102) match corresponding seats of licenses in the virtual pool (140); and
determining a license state of non-compliance (806) in the event that the reconciliation indicates that for at least one service or feature that is available from the service provider and is in use by at least one of the one or more devices used by the user (102), the virtual pool (140) lacks a corresponding seat of a license.

13. The licensing method of claim 1, wherein the reconciliation is performed by a license infrastructure regarding services and features available from one or more service providers, and determining the license state comprises:
determining a license state of compliance (804) in the event that the reconciliation indicates that the services and features that are in use by the one or more devices used by the user (102) match corresponding seats of licenses in the virtual pool (140); and
determining a license state of non-compliance (806) in the event that the reconciliation indicates that for at least one service or feature that is in use by at least one of the one or more devices used by the user (102), the virtual pool (140) lacks a corresponding seat of a license.

14. A computing device (900) comprising:
a processor (902);
a computer readable medium (906) coupled to the processor, the computer readable medium storing instructions (908), which when executed by the processor, cause the computing device to perform the method of any one of claims 1 to 13.

15. A computer program product comprising instructions (908) which, when the program is executed by a processor (902) of a computing device (900), cause the computing device to carry out the method of any one of claims 1 to 13.
